(19) Europäisches Patentamt
European Patent Office
Office européen des brevets

(11) **EP 1 994 998 A1**

(12) **EUROPEAN PATENT APPLICATION**
published in accordance with Art. 158(3) EPC

(43) Date of publication:
**26.11.2008 Bulletin 2008/48**

(51) Int Cl.:
**B21D 24/02** *(2006.01)*  **B30B 15/02** *(2006.01)*

(21) Application number: **07714684.3**

(22) Date of filing: **21.02.2007**

(86) International application number:
**PCT/JP2007/053184**

(87) International publication number:
**WO 2007/097360 (30.08.2007 Gazette 2007/35)**

(84) Designated Contracting States:
**DE IT TR**

(30) Priority: **27.02.2006 JP 2006049544**

(71) Applicant: IHI Corporation
**Tokyo 135-8710 (JP)**

(72) Inventor: **ONISHI, Dai**
**Koto-ku, Tokyo 135-8710 (JP)**

(74) Representative: **Grünecker, Kinkeldey,**
**Stockmair & Schwanhäusser**
**Anwaltssozietät**
**Leopoldstrasse 4**
**80802 München (DE)**

(54) **CUSHION LOAD CONTROL DEVICE AND PRESS MACHINE HAVING CUSHION LOAD CONTROL DEVICE**

(57)     A cushion load control device for a press machine includes a hydraulic cylinder 2 forming a die cushion, a hydraulic control valve 4 connected to the hydraulic cylinder 2, a hydraulic source 6 connected to the hydraulic cylinder 2 via the hydraulic control valve 4, an opening degree controlling part 11 for outputting a control signal for controlling an opening degree of the hydraulic control valve 4 on the basis of the set pressure value of the hydraulic cylinder, a speed detection unit 15 for detecting the lowering speed of the die cushion, and a signal correction part 18 for correcting the value of the control signal in accordance with the set pressure value and the lowering speed value detected by the speed detection unit 15.

FIG.2

**Description**

BACKGROUND OF THE INVENTION

Technical Field of the Invention

The present invention relates to a cushion load control device for controlling a load of a die cushion and a press machine having the cushion load control device.

Description of the Related Art

In a press machine, for instance, when a crank shaft is driven by a motor to rotate, the crank shaft operates so as to convert rotating motion into up-and-down motion, thereby moving up and down a slide connected to the crank shaft.
When lowering the slide, press operation of the press machine is carried out by inserting a workpiece between an upper die fixed to a lower surface of the slide and a lower die disposed below the slide.
A cushion mechanism is provided below the slide to receive a load of the lowered slide (i.e., the upper die) during the press operation.

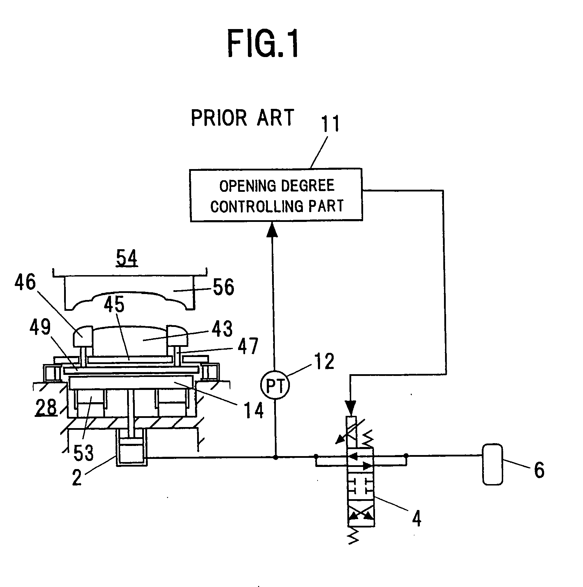

Fig. 1 shows the cushion mechanism. The cushion mechanism is fixed to a bed 28 as a lower structural body of the press machine, and includes a bolster plate 45 having an upper surface to which the lower die is fixed, a blank holder 46 which is provided in the lower die 43, a plurality of cushion pins 47 which support the blank holder 46 from the downside, a pin plate 49 which supports the cushion pins 47 from the downside, and a cushion pad 14 which supports the pin plate 49 from the downside.
The cushion mechanism further includes a hydraulic cylinder 2 and an air cylinder 53 for receiving the press load acting on the cushion pad 14.
The die cushion is constructed by the blank holder 46, the cushion pins 47, the pin plate 49, the cushion pad 14, and the hydraulic cylinder 2.
When the slide 54 is lowered so that an upper die 56 comes into contact with the blank holder 46 during the press operation, the pin plate 49 is lowered and the cushion pad 14 being in contact with the pin plate 49 is accordingly lowered.
At this time, the press load applied from the upper die 56 to the cushion pad 14 is supported by the hydraulic cylinder 2 and the air cylinder 53 disposed in the lower portion of the cushion pad 14.
A set pressure value of the hydraulic cylinder 2 is set in advance with respect to a rotation angle of the crank shaft so as to obtain an appropriate cushion performance. For instance, the set pressure value is set to a constant value.
The press machine further includes a cushion load control device. As shown in Fig. 1, the cushion load control device includes the hydraulic cylinder 2, a servo valve 4 which is connected to the hydraulic cylinder 2, a hydraulic tank 6 which is connected to the hydraulic cylinder 2 through the servo valve 4, a pressure transducer 12 which detects a hydraulic pressure of the hydraulic cylinder 2, and an opening degree controlling part 11 which compares the set pressure value with a pressure detection value obtained by the pressure transducer 12 and controls an opening degree of the servo valve 4 so that a hydraulic pressure of the hydraulic cylinder 2 becomes the set pressure value.
However, when a feedback control is carried out by the opening degree controlling part 11, a lowering speed of the slide 54 varies in accordance with the rotation angle of the crank shaft, thereby deteriorating a control performance. Particularly, since the lowering speed of the slide 54 decreases at a position around BDC(bottom dead center), the pressure of the hydraulic cylinder 2 becomes largely smaller than the set pressure value.
For this reason, in Patent Document 1, the following control is carried out.
The cushion load control device disclosed in Patent Document 1 detects the lowering speed of the slide and carries out a control correction so that the servo valve is operated toward its closing position when the lowering speed of the slide becomes smaller as the slide comes closer to BDC. Hence, the hydraulic pressure of the hydraulic cylinder is controlled to be closer to the set pressure value.

[Patent Document 1] Japanese Laid-open Patent Publication No. H04 (1992)-172199 'Pressure controlling Apparatus for NC die cushion'

However, although the cushion load control device disclosed in Patent Document 1 corrects the opening degree of the servo valve in accordance with the lowering speed of the slide, if the control disclosed in Patent Document 1 is carried out when a set load of the die cushion varies depending upon difference in the type of a workpiece as a press object, the hydraulic pressure of the hydraulic cylinder deviates from the set pressure value. As a result, a problem arises in that an actual load, which acts on the die cushion deviates from the set load value.

SUMMARY OF THE INVENTION

Therefore, a first object of the invention is to provide a cushion load control device capable of automatically preventing an actual load acting on a die cushion from deviating from a set load value even when the set load value of the die cushion varies depending on a difference in the type of a workpiece as a press object.

In addition, a second object of the invention is to provide a press machine provided with a cushion load control device capable of automatically preventing an actual load acting on the die cushion from deviating from the set value even when the set load value of the die cushion varies.

According to the invention, in order to attain the first object, there is provided a cushion load control device for a press machine for controlling a press load acting on a die cushion disposed below a slide operable to be moved up and down, the cushion load control device including: a hydraulic cylinder which constitutes a die cushion; a hydraulic control valve configured to be connected to the hydraulic cylinder; a hydraulic source configured to be connected to the hydraulic cylinder via the hydraulic control valve; an opening degree controlling part configured to output a control signal for controlling an opening degree of the hydraulic control valve on the basis of a set pressure value of the hydraulic cylinder; a speed detection unit configured to detect a lowering speed of the die cushion; and a signal correction part configured to correct a value of the control signal in accordance with the set pressure value and a lowering speed value detected by the speed detection unit, wherein the opening degree of the hydraulic control valve is adjustably controlled on the basis of the control signal corrected by the signal correction part.

With the described configuration, since the signal control part corrects the control signal by taking into consideration not only the lowering speed of the die cushion but also the set pressure value of the hydraulic cylinder, it is possible to automatically prevent the hydraulic pressure of the hydraulic cylinder from deviating from the set pressure value even when the set load of the die cushion (i.e., the set pressure value of the hydraulic cylinder) largely varies.

According to a preferred embodiment of the invention, the signal correction part corrects the value of the control signal so that the opening degree of the hydraulic control valve is more reduced as the set pressure value becomes larger.

The hydraulic pressure of the hydraulic cylinder generally has a tendency of becoming smaller than the set pressure value at a position around BDC as the set pressure value becomes larger and becoming larger than the set pressure value at a position around BDC as the set pressure value becomes smaller.
Nevertheless, in this embodiment, since the value of the control signal is corrected so that the opening degree of the hydraulic control valve is more reduced as the set pressure value becomes larger, it is possible to suppress the tendency.

According to a further preferred embodiment of the invention, the signal correction part corrects the value of the control signal so that the opening degree of the hydraulic control valve is more reduced as the lowering speed of the die cushion is slower.

The hydraulic pressure of the hydraulic cylinder has a general tendency such that the hydraulic pressure is reduced more than the set pressure value as the lowering speed of the die cushion is slower.
Nevertheless, in this embodiment, since the value of the control signal is corrected so that the opening degree of the hydraulic control valve is reduced as the lowering speed of the die cushion becomes slower, it is possible to correct a variation in hydraulic pressure due to a variation in the set pressure value and a variation in the lowering speed of the die cushion.

According to the invention, in order to attain the second object, there is provided a press machine including: a motor; a rotation element which is rotationally driven by the motor; a converting mechanism configured to covert rotating motion of the rotation element into reciprocating motion; a slide configured to be connected to the converting mechanism to thereby perform a reciprocating motion; and a cushion load control device configured to control a press load acting on a die cushion disposed below the slide, wherein the cushion load control device includes a hydraulic cylinder which constitutes a die cushion; a hydraulic control valve configured to be connected to the hydraulic cylinder; a hydraulic source configured to be connected to the hydraulic cylinder via the hydraulic control valve; an opening degree controlling part configured to output a control signal for controlling an opening degree of the hydraulic control valve on the basis of a set pressure value of the hydraulic cylinder; a speed detection unit configured to detect a lowering speed of the die cushion; and a signal correction part configured to correct a value of the control signal in accordance with the set pressure value and a lowering speed value detected by the speed detection unit, and wherein the opening degree of the hydraulic control valve is controlled on the basis of the control signal corrected by the signal correction part.

In the press machine with the described configuration, since the signal control part corrects the control signal by taking into consideration not only the lowering speed of the die cushion but also the set pressure value of the hydraulic cylinder, it is possible to automatically prevent the hydraulic pressure of the hydraulic cylinder from deviating from the set pressure value even when the set load of the die cushion (i.e., the set pressure value of the hydraulic cylinder) largely varies.

According to the invention, in order to attain the first object, there is provided a cushion load control device for a press machine, which controls a press load acting on a die cushion disposed below a slide operable to be moved up and down, the cushion load control device including: a servo motor; a power transmission unit configured to convert rotating motion of the servo motor into up-and-down motion so as to move up and down the die cushion; a position control part configured to output a control signal for controlling a height of the die cushion on the basis of a set load value of the die cushion; a speed detection unit which detects a lowering speed of the die cushion; and a signal correction part configured to correct a value of the control signal in response to the set load value and a lowering speed value detected by the speed detection unit, wherein the height of the die cushion is adjustably controlled on the basis of the control signal corrected by the signal correction part.

With the foregoing configuration, since the control signal is corrected on the basis of the set load value and the lowering speed of the die cushion, it is possible to automatically prevent the actual load acting on the die cushion from deviating from the set load value in accordance with a variation in the set load value and the lowering speed of the die cushion.

As described above, according to the invention, it is possible to automatically prevent the hydraulic pressure from deviating from the set pressure value even when the set load of the die cushion varies.

BRIEF DESCRIPTION OF THE DRAWINGS

Fig. 1 is a diagrammatic view illustrating a general configuration of a load control device and a cushion mechanism of a press machine according to a conventional art.

Fig. 2 is a diagrammatic view illustrating a configuration of a cushion load control device according to a first embodiment of the invention.

Fig. 3A is a diagram illustrating an actual hydraulic pressure value and a set pressure value when a hydraulic control is carried out on the basis of a variation in lowering speed of a cushion pad.

Fig. 3B is another diagram illustrating an actual hydraulic pressure value and a set pressure value when a hydraulic control is carried out on the basis of a variation in lowering speed of a cushion pad.

Fig. 3C is another diagram illustrating an actual hydraulic pressure value and a set pressure value when a hydraulic control is carried out on the basis of a variation in lowering speed of a cushion pad.

Fig. 4A is a diagram illustrating the actual hydraulic pressure value and the set pressure value when the hydraulic control is carried out on the basis of a variation in set pressure value and lowering speed of the cushion pad.

Fig. 4B is another diagram illustrating the actual hydraulic pressure value and the set pressure value when the hydraulic control is carried out on the basis of a variation in set pressure value and lowering speed of the cushion pad.

Fig. 4C is another diagram illustrating the actual hydraulic pressure value and the set pressure value when the hydraulic control is carried out on the basis of a variation in set pressure value and lowering speed of the cushion pad.

Fig. 5 is a diagrammatic view illustrating a configuration of a cushion load control device according to a second embodiment of the invention.

DESCRIPTION OF THE PREFERRED EMBODIMENT

Hereinafter, preferred embodiments of the invention will be described in detail with reference to the accompanying drawings. In addition, in the respective drawings, the same reference numerals are given to the same components and the repetitive description thereof will be omitted.

[First Embodiment]

A press machine includes a motor, a crank shaft as a rotation member (element) which is rotationally driven by the motor so as to convert rotating motion into reciprocating motion, a slide which is connected to the crank shaft so as to move up and down, an upper die which is fixed to a lower surface of the slide, and a cushion mechanism which is disposed below the slide and to which a load is applied from the upper die when the slide descends. In addition, the crank shaft as the rotation member and mechanical components connected to the crank shaft configure a converting mechanism which converts the rotating motion of the rotation member into the reciprocating motion of the slide, but the converting mechanism may be appropriately configured as, for instance, a cam or the like.

Since the cushion mechanism has the same configuration as that shown in Fig. 1, the description will be omitted. In such a cushion mechanism, a press load which is applied from the slide (i.e., upper die) to a cushion pad 14 during a press operation is set by a hydraulic pressure value of a hydraulic cylinder 2.

The press machine is provided with a cushion load control device which performs a control for maintaining the hydraulic pressure value of the hydraulic cylinder 2 at a set pressure value during the press operation.

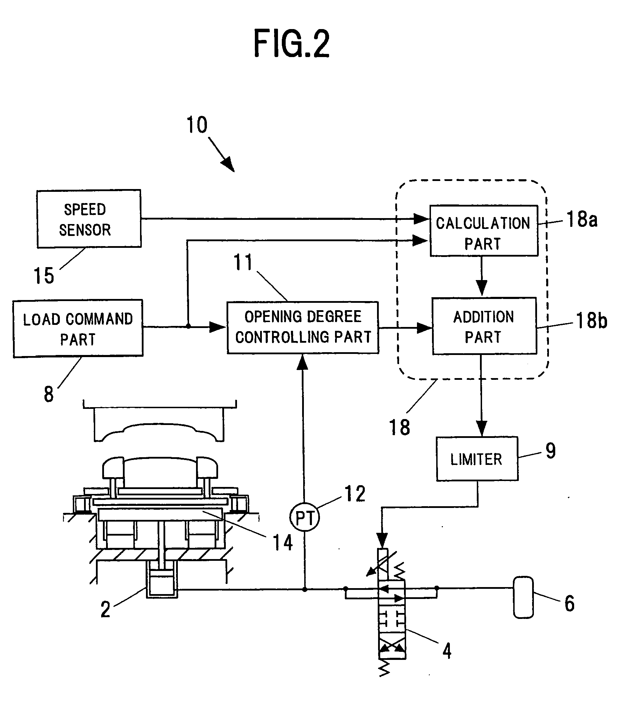

Fig. 2 shows the configuration of a cushion load control device 10 according to the first embodiment. As shown in Fig. 2, the cushion load control device 10 includes the hydraulic cylinder 2, a servo valve 4 which is connected to the hydraulic cylinder 2, a hydraulic tank 6 which is connected to the hydraulic cylinder 2 via the servo valve 4, a load command part 8 which is capable of outputting a set pressure value of the hydraulic cylinder 2 in accordance with press conditions input, for example, by an operator, and an opening degree controlling part 11 which is capable of outputting a control signal for controlling an opening degree of the servo valve 4 on the basis of the set pressure value that is input by the load command part 8.

In addition, the hydraulic control valve is configured as the servo valve 4, but may be configured as other appropriate elements. The hydraulic source is configured as the hydraulic tank 6, but may be configured as other appropriate elements.

The opening degree controlling part 11 outputs control a signal for maintaining the hydraulic pressure value of the hydraulic cylinder 2 at the set pressure value on the basis of a difference obtained by comparing the set pressure value that is output by the load command part 8 and a hydraulic pressure detection value that is output by a pressure transducer 12 (PT) as a hydraulic pressure sensor for measuring a hydraulic pressure value of the hydraulic cylinder 2. The control signal is input to the servo valve 4 via a later-described signal correction part 18 and a limiter 9. The servo valve 4 adjustably controls the opening degree on the basis of the input control signal. For instance, the control signal may be a voltage signal, and the opening degree of the servo valve 4 is proportional to the voltage value.

In addition, since the press load is applied from the slide to the hydraulic cylinder 2 during the press operation, the hydraulic pressure value of the hydraulic cylinder 2 is larger than that of the hydraulic tank 6. At the press operation in which a piston of the hydraulic cylinder 2 descends, the opening degree of the servo valve 4 is controlled so as to control a flow amount from the hydraulic cylinder 2 to the hydraulic tank 6, thereby maintaining the hydraulic pressure value of the hydraulic cylinder 2 at the set pressure value.

According to this embodiment, the cushion load control device 10 includes a speed sensor 15 which detects a lowering speed of the die cushion.

The speed sensor 15 may be configured as, for instance, an element or unit for measuring a lowering speed of the die cushion on the basis of a detection value obtained by a speed sensor for measuring a speed or a stroke sensor for measuring a stroke of the cushion pad 14 or the slide. Alternatively, the speed sensor 15 may be configured as a member for calculating the lowering speed of the die cushion on the basis of a crank shaft rotary angle detection value obtained by a rotary encoder and a predetermined relationship between crank shaft rotary angles and the lowering speeds of the cushion pad 14.

In addition, a speed detection unit for measuring the lowering speed of the die cushion is configured as the speed sensor 15, but may be configured as other appropriate members.

Hereinafter, a case will be described in which the lowering speed of the die cushion is detected on the basis of a speed of the cushion pad 14.

The cushion load control device 10 further includes the signal correction part 18 which corrects a value of the control signal output by the opening degree controlling part 11 in accordance with the set pressure value output by the load command part 8 and the lowering speed of the cushion pad 14 detected by the speed sensor 15.

As shown in Fig. 2, the signal correction part 18 includes a calculation part 18a and an addition part 18b. The calculation part 18a calculates a correction value on the basis of the set pressure value output by the load command part 8 and the speed detection value of the cushion pad 14 detected by the speed sensor 15.

The addition part 18b outputs the corrected control signal by adding the correction value output by the calculation part 18a to the value of the control signal output by the opening degree controlling part 11.

First, for the purpose of comparison, a case will be described in which the signal correction part 18 corrects the control signal on the basis of the speed detection value among the set pressure value and the speed detection value of the cushion pad 14 detected by the speed sensor 15. Then, another case will be described in which the control signal is corrected on the basis of both the speed detection value and the set pressure value.

The signal correction part 18 corrects the value of the control signal so that the opening degree of the servo valve 4 is reduced as the lowering speed of the cushion pad 14 becomes slower. In this case, the correction value may be set so that the correction value of the control signal are proportional to the lowering speed of the cushion pad 14.

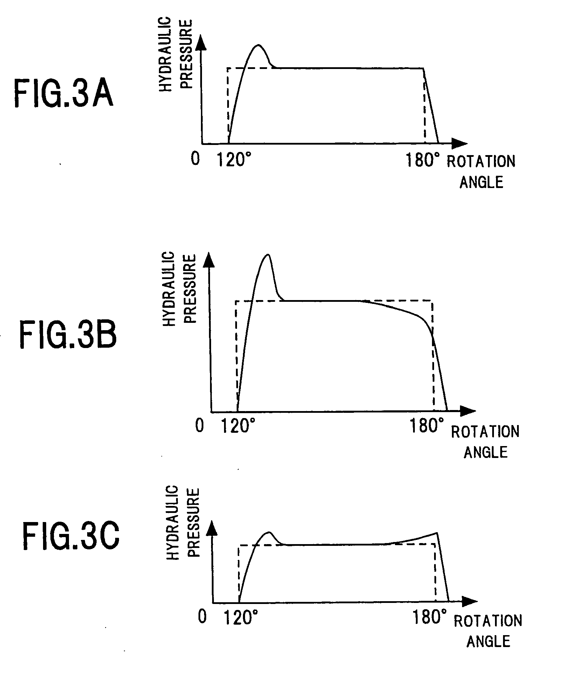

In the graphs of Figs. 3A through 3C, the ordinate indicates the hydraulic pressure value of the hydraulic cylinder 2, and the abscissa indicates the crank shaft rotation angle. The crank shaft rotation angle indicates the actual rotation angle of the crank shaft. The slide reciprocates once between TDC (top dead center) and BDC (bottom dead center) during one complete rotation of the crank shaft. In Figs. 3A through 3C, the crank shaft rotation angle when the slide is located at TDC is set to be 0 degree, the crank shaft rotation angle increases as the slide approaches BDC, and when the slide arrives at BDC, the crank shaft rotation angle is set to be 180 degree. The crank shaft rotation angle further increases as the slide comes close to TDC after passing through BDC, and when the slide arrives at TDC, the crank shaft rotation angle is set to be 360 degree, which is the same rotational position as that at 0 degree. In addition, in the drawings of Figs. 3A through 3C, the dashed line indicates the set pressure value that is output by the load command part 8, and the solid line indicates an actual hydraulic pressure value of the hydraulic cylinder 2 when the control signal is corrected on the basis of the lowering speed of the cushion pad 14. In the example shown in Figs. 3A through 3C, when the crank shaft rotation angle is at 120 degree, the cushion pad 14 starts to descend, and when the crank shaft rotation angle is at 180 degree, the slide is located at BDC, thereby allowing the piston of the hydraulic cylinder 2 to be in its most pressed state.

When $P_R$ denotes a rated pressure drop of the servo valve 4, $P_T$ denotes a pressure value of the hydraulic tank 6, and $P_C$ denotes a set pressure value of the hydraulic cylinder 2, Fig. 3A indicates a case where $P_R \fallingdotseq P_C - P_T$, Fig. 3B indicates a case where $P_R \ll P_C - P_T$, and Fig. 3C indicates a case where $P_R \gg P_C - P_T$.

As will be understood from the indication of Figs. 3A through 3C, in the case where $P_R \fallingdotseq P_C - P_T$, the actual hydraulic pressure value is identical with the set pressure value except for a press start time. However, in the case where $P_R \ll P_C - P_T$ due to an increase in set pressure value, an overshoot amount that the actual hydraulic pressure value goes past the set pressure value becomes larger at the press start time, and the actual pressure value becomes smaller than the set pressure value at a position around BDC.

In addition, in the case where $P_R \gg P_C - P_T$, the overshoot amount that the actual hydraulic pressure value goes past the set pressure value becomes smaller at the press start time, but the actual hydraulic pressure value becomes larger than the set pressure value at a position around BDC.

In this way, when the control signal correction is carried out on the basis of the lowering speed of the cushion pad 14, in the case where $P_R \fallingdotseq P_C - P_T$, the actual hydraulic pressure value is identical with the set pressure value except for a start time of the press operation. However, when the set pressure value is largely deviated from $P_C = P_T + P_R$, the actual pressure value goes far from the set pressure value.

For this reason, according to this embodiment, the signal correction part 18 corrects the control signal on the basis of the set pressure value of the hydraulic cylinder 2 as well as the lowering speed of the cushion pad 14.
A case will now be described hereinbelow in which the control signal is corrected on the basis of the set pressure value and the lowering speed of the cushion pad 14.

As shown in Fig. 2, the calculation part 18a calculates the correction value of the control signal on the basis of the set pressure value that is output by the load command part 8 as well as the lowering speed of the cushion pad 14 that is output by the speed sensor 15.
The signal correction part 18 corrects the control signal so that the opening degree of the servo valve 4 is more reduced as the set pressure value increases.

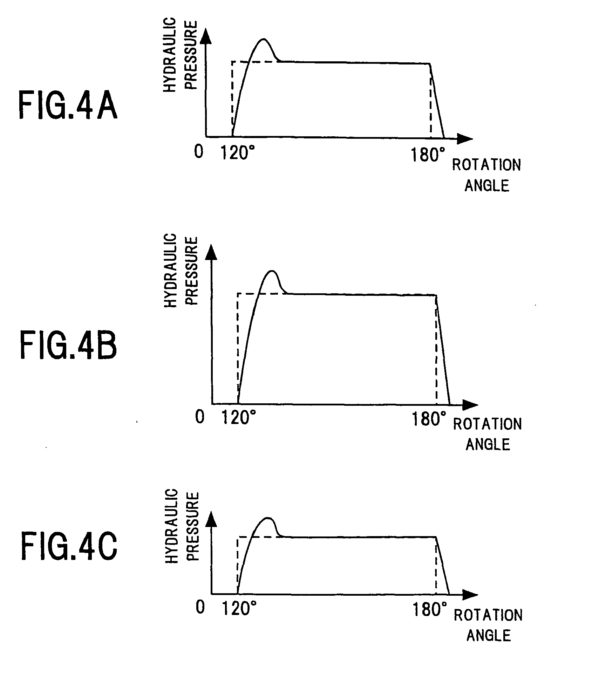

When the value of the control signal is corrected in this way, the result shown in Figs. 4A through 4C is obtained. Fig. 4A indicates a case where $P_R \fallingdotseq P_C - P_T$, Fig. 4B indicates a case where $P_R \ll P_C - P_T$, and Fig. 4C shows a case where $P_R \gg P_C - P_T$.
As will be clearly understood from Figs. 4A through 4C, the actual hydraulic pressure value is identical with the set pressure value except for the start time of the press operation.

Such a correction value may be proportional to, for instance, the Formula 1, below.

[Formula 1]

$$\{P_R / (P_C - P_T)\}^{1/2} \times V$$

In the Formula 1, $P_R$, $P_C$, and $P_T$ are the same as described above, and V denotes the lowering speed of the cushion pad 14. In addition, in this example, the speed V corresponds to the lowering speed of the cushion pad 14 from the time when the cushion pad 14 starts to descend to the time when the cushion pad 14 arrives at BDC, and becomes 0 when the cushion pad 14 arrives at BDC. After BDC, the speed V is maintained at 0.
Accordingly, the correction value increases, as shown in the Formula 1, as the lowering speed V becomes faster.

As understood from the Formula 1, the correction value is proportional also to the Formula 2.

[Formula 2]

$$\{P_R / (P_C - P_T)\}^{1/2}$$

In this way, as shown in the Formula 2, since the correction value is set so as to decreases as the set pressure value increases in consideration of the rated pressure drop $P_R$ of the servo valve 4 and the pressure $P_T$ of the hydraulic tank 6, it is possible to carry out a control in accordance with a designed reference value of the servo valve 4.

In addition, in a case where the hydraulic cylinder 2 is connected to the hydraulic tank 6 through a plurality of servo valves 4 arranged in parallel, and opening degrees of these servo valves 4 are controlled in a synchronized manner, it is desirable to consider the number of servo valves 4.

It is desirable to consider effective area of the hydraulic cylinder 2 or rated flow amount of the servo valve 4.

Formula 3 indicates a correction value in consideration of such factors.

[Formula 3]

$$(1/n) \times (A/Q_R) \times \{P_R/(P_C - P_T)\}^{1/2} \times v$$

In the Formula 3, n denotes the number of servo valves 4, A denotes effective area of a lower chamber of the hydraulic cylinder, and $Q_R$ denotes rated flow amount of the servo valve 4.

In terms of the correction value indicated in the Formula 3, it is possible to control the opening degree in consideration of the number n of the servo valves 4, the effective area A of the hydraulic cylinder 2, and the rated flow amount $Q_R$ of the servo valve 4.

[Second Embodiment]

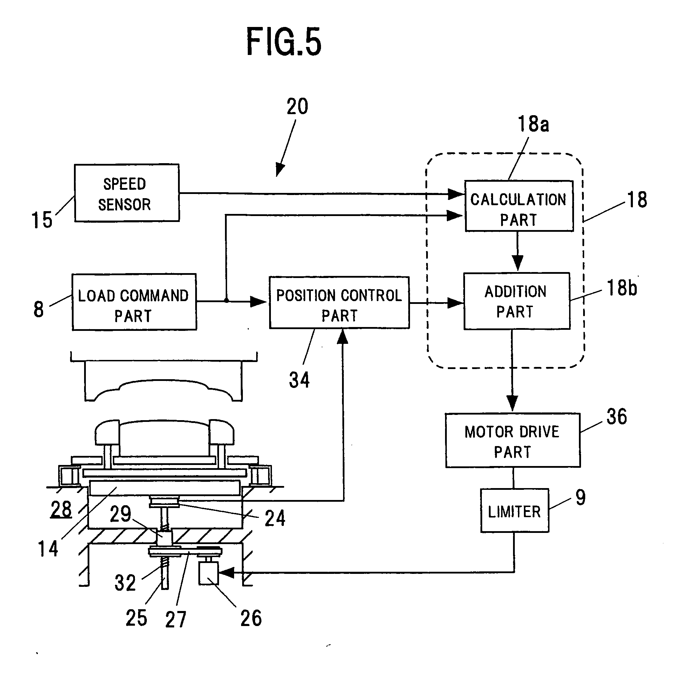

Fig. 5 shows a configuration of the cushion load control device 20 according to the second embodiment of the invention. The cushion mechanism of the second embodiment is provided with a servo motor 26 instead of the hydraulic cylinder 2 shown in Fig. 2. The servo motor 26 moves up and down the cushion pad 14 so as to adjust a load that acts on the cushion pad 14. Hereinafter, different parts from the first embodiment will be described. The other parts may be same as or similar to those of the first embodiment.

The cushion load control device 20 according to the second embodiment includes a load cell 24 as a load measuring part which is fixed to the lower surface of the cushion pad 14 so as to detect a load acting on the cushion pad 14 during the press operation, a rod 25 which is coupled to the lower portion of the load cell 24 and is driven to move up and down to move up and down the cushion pad 14, and the servo motor 26 which drives a ball nut 29 to be rotated via a transmission belt 27.

The ball nut 29 is mounted, for instance, at a press machine bed 28 so as to be rotatable and to be immovable in a vertical direction. A ball screw 32 is formed in the rod 25 so as to be in screw-engagement with a female screw of the ball nut 29. Accordingly, when the ball nut 29 is driven to rotate, the rod 25 is moved up and down. In addition, a power transmission means (unit) is configured by the transmission belt 27 and the ball nut 29, but may be configured as other appropriate members.

The cushion load control device 20 includes the load command part 8 which outputs the set load value and a position control part 34 which outputs control signal for rotating the servo motor 26 on the basis of the set load value that is input by the load command part 8.

The position control part 34 compares the set load value with a load detection value detected by the load cell 24, and performs a feedback control so that the load acting on the cushion pad 14 becomes the load instruction value (the set load value) on the basis of the comparison result.

In the same way as the first embodiment, the cushion load control device 20 further includes the speed sensor 15 which detects the lowering speed of the cushion pad 14.

In addition, the cushion load control device 20 further includes the calculation part 18a which calculates the correction value of the control signal on the basis of the set load value that is output by the load command part 8 and the lowering speed value detected by the speed sensor 15.

Then, the addition part 18b of the cushion load control device 20 corrects the control signal by adding the correction value that is input by the calculation part 18a to the value of the control signal that is input by the position control part 34.

A motor drive part 36 receives the corrected control signal and allows current to flow to the servo motor 26 via the limiter 9 for a predetermined time so as to drive the servo motor 26 to rotate by the rotation angle in accordance with the corrected control signal.

In this way, since the control signal is corrected on the basis of the set load value and the lowering speed of the cushion pad 14, it is possible to restrict the actual load acting on the cushion pad 14 from deviating from the set load value in accordance with a variation in the set load value and the lowering speed of the cushion pad 14.

[Other Embodiments]

The invention is not limited to the preferred embodiments, but may be, of course, modified variously in the scope without departing from the spirit of the invention.

**Claims**

1. A cushion load control device for a press machine for controlling a press load acting on a die cushion disposed below a slide capable of performing an up-and-down motion, the cushion load control device comprising:

   a hydraulic cylinder which constitutes a die cushion;
   a hydraulic control valve configured to be connected to the hydraulic cylinder;
   a hydraulic source configured to be connected to the hydraulic cylinder via the hydraulic control valve;
   an opening degree controlling part configured to output a control signal for controlling an opening degree of the hydraulic control valve on the basis of a set pressure value of the hydraulic cylinder;
   a speed detection unit configured to detect a lowering speed of the die cushion; and
   a signal correction part configured to correct a value of the control signal in accordance with the set pressure value and a lowering speed value detected by the speed detection unit,

   wherein the opening degree of the hydraulic control valve is controlled on the basis of the control signal corrected by the signal correction part.

2. The cushion load control device according to Claim 1, wherein the signal correction part corrects the value of the control signal in such a manner that the opening degree of the hydraulic control valve is reduced as the set pressure value is larger.

3. The cushion load control device according to Claim 1 or 2, wherein the signal correction part corrects the value of the control signal in such a manner that the opening degree of the hydraulic control valve is reduced as the lowering speed of the die cushion becomes slower.

4. A press machine comprising:

   a motor;
   a converting mechanism including a rotation element driven by the motor to perform rotating motion and configured to covert the rotating motion into reciprocating motion;
   a slide configured to be connected to the converting mechanism to perform reciprocating motion; and
   a cushion load control device which controls a press load acting on a die cushion disposed below the slide,

   wherein the cushion load control device comprises a hydraulic cylinder which constitutes a die cushion; a hydraulic control valve configured to be connected to the hydraulic cylinder; a hydraulic source which is connected to the hydraulic cylinder via the hydraulic control valve; an opening degree controlling part configured to output a control signal for controlling an opening degree of the hydraulic control valve on the basis of a set pressure value of the hydraulic cylinder; a speed detection unit configured to detect a lowering speed of the die cushion; and a signal correction part configured to correct a value of the control signal in accordance with the set pressure value and a lowering speed value detected by the speed detection unit, and
   wherein the opening degree of the hydraulic control valve is controlled on the basis of the control signal corrected by the signal correction part.

5. A cushion load control device for a press machine for controlling a press load acting on a die cushion disposed below a slide capable of performing an up-and-down motion, the cushion load control device comprising:

   a servo motor;
   a power transmission unit configured to convert rotating motion of the servo motor into an up-and-down motion to thereby move up and down the die cushion;
   a position control part configured to output a control signal for controlling height of the die cushion on the basis of a set load value of the die cushion;
   a speed detection unit configured to detect a lowering speed of the die cushion; and
   a signal correction part configured to correct a value of the control signal in accordance with the set load value and a lowering speed value detected by the speed detection unit,

wherein the height of the die cushion is controlled on the basis of the control signal corrected by the signal correction part.

# FIG.1

PRIOR ART

# FIG.2

FIG.3A

FIG.3B

FIG.3C

FIG.4A

FIG.4B

FIG.4C

# FIG.5

**INTERNATIONAL SEARCH REPORT**

| International application No. |
| --- |
| PCT/JP2007/053184 |

A. CLASSIFICATION OF SUBJECT MATTER
*B21D24/02*(2006.01)i, *B30B15/02*(2006.01)i

According to International Patent Classification (IPC) or to both national classification and IPC

B. FIELDS SEARCHED

Minimum documentation searched (classification system followed by classification symbols)
B21D24/02, B30B15/02

Documentation searched other than minimum documentation to the extent that such documents are included in the fields searched
Jitsuyo Shinan Koho          1922-1996     Jitsuyo Shinan Toroku Koho     1996-2007
Kokai Jitsuyo Shinan Koho    1971-2007     Toroku Jitsuyo Shinan Koho     1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 4-172199 A   (Komatsu Ltd.), 19 June, 1992 (19.06.92), All references & US 5339665 A          & EP 0556390 A1 & WO 92/07711 A1          & CA 2094827 A1 | 1-4 |
| X | JP 2006-26738 A  (Komatsu Ltd.), 02 February, 2006 (02.02.06), All references & US 2005/0274243 A1    & DE 102005028269 A | 5 |

☐ Further documents are listed in the continuation of Box C.   ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    13 March, 2007 (13.03.07) | Date of mailing of the international search report<br>    20 March, 2007 (20.03.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**EP 1 994 998 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H041992172199 B